# EUROPÄISCHE PATENTANMELDUNG

(11) **EP 3 462 380 A2**
(43) Veröffentlichungstag der Anmeldung: **03.04.2019**
(21) Anmeldenummer: 18196252.3
(22) Anmeldetag: 24.09.2018
(51) Int. Cl.: G06K 9/00, G06Q 10/08, G07B 17/00

(54) **VERFAHREN UND SYSTEM ZUR KENNZEICHNUNG VON SENDUNGSEINHEITEN**

(30) Priorität: 27.09.2017 DE 102017217242
(71) Anmelder: Deutsche Post AG, 53113 Bonn (DE)
(72) Erfinder: Özyigit, Ali, 53177 Bonn (DE)
(74) Vertreter: dompatent von Kreisler Selting Werner - Partnerschaft von Patent- und Rechtsanwälten mbB

(57) **Zusammenfassung**

Die Erfindung betrifft ein Verfahren zur Kennzeichnung einer Sendungseinheit in einem Logistikprozess. Weiterhin betrifft die Erfindung ein System zur Kennzeichnung einer Sendungseinheit in einem Logistikprozess. Das erfindungsgemäße Verfahren zur Kennzeichnung einer Sendungseinheit in einem Logistikprozess enthält die Schritte, zunächst ein erstes Bild der Oberfläche einer Sendungseinheit zu erstellen, um anschließend dieses Bild mit einer Identnummer zu verknüpfen und das Bild und die Identnummer auf einer Datenverarbeitungseinheit zu speichern.

## Beschreibung

Die Erfindung betrifft ein Verfahren zur Kennzeichnung einer Sendungseinheit in einem Logistikprozess. Weiterhin betrifft die Erfindung ein System zur Kennzeichnung einer Sendungseinheit in einem Logistikprozess.

In Logistikprozessen ist es üblich, dass eine Sendungseinheit mit einer Adresse versehen, die Logistikgebühr durch Aufbringen eines Freimachungsvermerks entrichtet und anschließend die Sendungseinheit bei einem Logistikdienstleister eingeliefert wird, der die Sendungseinheit zu dem Adressaten transportiert. Eine Sendungseinheit kann beispielsweise ein Brief oder auch ein Paket sein. Der Freimachungsvermerk kann in Form von aufklebbaren Brief- oder Paketmarken oder in Form eines Drucks aufgebracht werden. Das Einliefern der Sendungseinheit bei einem Logistikdienstleister kann durch das Einstellen der Sendungseinheit in eine Vorrichtung oder auch durch Abliefern bei dem Logistikdienstleister direkt oder auch durch Abholung erfolgen. Der Logistikdienstleister erfasst die logistikspezifischen Daten der Sendungseinheit. Dies sind beispielsweise die Adressdaten, Absenderdaten, Zeitstempel und/oder weitere Daten zur eindeutigen Identifizierung der Sendungseinheit.

Im Stand der Technik sind Verfahren bekannt, mit denen die Oberfläche von Sendungseinheiten wie von Briefen oder Paketen fotografiert oder gescannt werden, wobei Informationen auf diesen Oberflächen, die in Klarschrift oder als Code, beispielsweise als Barcode, ausgelesen werden. Informationen in Klarschrift können dabei mittels OCR (optical character recognition) maschinenlesbar gemacht werden.

Aus der US-amerikanischen Patentanmeldung US 2012 / 0051587 A1 sind darüber hinaus ein Verfahren und eine Vorrichtung für die Postanalyse bekannt. Das Verfahren umfasst das Empfangen eines Bildes eines ersten Poststücks und zugehöriger maschinenerkannter Daten in einem Datenverarbeitungssystem. Die Methode beinhaltet das Vergleichen der maschinenerkannten Daten mit einer Zielliste, um eine Übereinstimmung mit einer Zielperson zu bestimmen. Das Verfahren umfasst darüber hinaus das Durchführen eines Schrifterkennungsprozesses auf dem Bild des Postsendungsstücks, wenn eine Übereinstimmung zwischen den maschinenerkannten Daten und dem Zielpersonal bestimmt wird. Der Schrifterkennungsprozess erzeugt Schriftdaten, die dem Poststück zugeordnet sind. Das Verfahren umfasst weiterhin das Speichern des Bildes des Postsendungsstücks und der zugehörigen maschinenerkannten Daten- und Schriftdaten.

Bei den bekannten Verfahren kann es vorkommen, dass sich Sendungseinheiten ohne bzw. mit nicht erkennbaren, zumindest nicht maschinenerkennbaren Freimachungsvermerken im Logistikprozess befinden. Dies kann beispielsweise dadurch geschehen, dass aufklebbare Freimachungsvermerke beim Handling der Sendungseinheit im Logistikprozess abhanden kommen oder der Druck von aufgedruckten Freimachungsvermerken beispielsweise wegen Tintenmangels oder Verschleiß der Druckeinrichtung nicht lesbar ist. Darüber hinaus kommt es auch vor, dass Sendungseinheiten mit gefälschten Frankierungsvermerken versehen und in den Logistikprozess eingeführt werden. In bekannten Logistikprozessen wird die Freimachung der Sendungseinheiten kontrolliert, da es auch immer wieder vorkommt, dass Sendungseinheiten dem Logistikprozess zugeführt werden, ohne dass eine entsprechende Gebühr entrichtet worden wäre. Die Kontrolle erfolgt üblicherweise in automatischen Sortieranlagen, wobei Sendungseinheiten ohne oder mit nicht erkennbarem gültigen Freimachungsvermerk ausgeschleust und beispielsweise einer manuellen Kontrolle zugeführt werden können. Wird auch dabei kein gültiger Freimachungsvermerk erkannt, wird üblicherweise die entsprechende Sendungseinheit zum Absender zurückgesendet. In anderen Logistikprozessen wird auf eine manuelle Kontrolle verzichtet und eine Sendungseinheit, bei der maschinell kein gültiger Freimachungsvermerk erkannt wird, zum Absender zurückgesendet. Diese Prozesse verlangen zusätzlichen Aufwand. Zusätzlich sinkt die Kundenzufriedenheit, wenn der Absender eine Sendungseinheit zurückerhält, obwohl sie einen gültigen Freimachungsvermerk aufweist, dieser jedoch zumindest maschinell nicht erkannt wurde.

Weiterhin sind die Prozesse zur eindeutigen Kennzeichnung einer Sendungseinheit aufwendig: entweder müssen Merkmale zur eindeutigen Kennzeichnung einer Sendungseinheit zusätzlich aufgebracht werden und/oder eine zu anderen Zwecken bereits aufgebracht Informationen, wie beispielsweise Schrift, muss beispielsweise durch einen OCR-Prozess maschinenlesbar gemacht werden.

Aufgabe der Erfindung ist es, ein Verfahren zur eindeutigen Kennzeichnung einer Sendungseinheit in einem Logistikprozess anzugeben, wobei der Aufwand zur Kennzeichnung der Sendungseinheit minimiert ist. Eine weitere Aufgabe der Erfindung ist es, ein System zur Kennzeichnung einer Sendungseinheit in einem Logistikprozess anzugeben, mit dessen Hilfe die Sendungseinheit kennzeichenbar ist und im weiteren Logistikprozess wieder erkennbar ist.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-8. Weiterhin wird die Aufgabe durch ein System nach Anspruch 9 gelöst. Vorteilhafte Ausführungsformen des Systems ergeben sich aus den Ansprüchen 10-12.

Das erfindungsgemäße Verfahren zur Kennzeichnung einer Sendungseinheit in einem Logistikprozess enthält die Schritte, zunächst ein erstes Bild der Oberfläche einer Sendungseinheit zu erstellen, wobei das erste Bild die Sendungseinheit kennzeichnet, um anschließend dieses Bild mit einer Identnummer zu verknüpfen und das Bild und die Identnummer auf einer Datenverarbeitungseinheit zu speichern. Das erste Bild enthält dabei Informationen über die Oberflächenstruktur der Sendungseinheit. Die Oberflächenstruktur ist bei entsprechender Auflösung einmalig und somit kennzeichnend für die Sendungseinheit. Die Identnummer kann im Moment der Verknüpfung mit dem Bild erzeugt oder aus beispielsweise einer im Vorhinein erzeugten Datenbank mit Identnummern entnommen werden. Durch die Verknüpfung des Bildes mit einer Identnummer ist eine einfache und schnelle Weiterverarbeitung der Informationen möglich. Das Bild und die Identnummer können beispielsweise auf einer zentralen Datenverarbeitungseinheit gespeichert werden. Dabei kann es sich um eine zentrale Datenverarbeitungseinheit eines Logistikdienstleisters handeln. Das Bild kann mit einer digitalen Kamera, beispielsweise auch der Kamera eines Smartphones aufgenommen werden. Unter Smartphone wird dabei ein Mobiltelefon verstanden, das Computer-Funktionalitäten und -konnektivität zur Verfügung stellt und mit einer Kamera ausgestattet ist. Heutige Smartphones weisen Kameras mit einer Auflösung von mehreren Megapixeln auf. Mit Kameras mit einer solch hohen Auflösung ist es möglich, ein Bild einer Sendungsoberfläche zu erstellen, wobei die Oberflächenstruktur der Sendungsoberfläche abbildbar ist. Diese Oberflächenstruktur ist eindeutig, sodass sich eine Sendungseinheit hierüber eindeutig identifizieren lässt.

In einer vorteilhaften Ausführungsform wird das erste Bild als Bilddatei gespeichert.

In einer weiteren vorteilhaften Ausführungsform wird das erste Bild mit einer digitalen Kamera erstellt.

Weiterhin hat es sich als vorteilhaft herausgestellt, wenn die digitale Kamera in einem mobilen Gerät integriert ist, das weiterhin mit einem Datenübertragungsnetzwerk, beispielsweise dem Internet beispielsweise drahtlos verbunden ist und über Funktionalitäten einer elektronischen Datenverarbeitungsanlage verfügt, wobei das Datenübertragungsnetzwerk mit einer Datenverarbeitungseinheit verbunden ist und auf dem mobilen Gerät ein EDV-Programm läuft, mit dessen Hilfe das erste Bild auf die die Datenverarbeitungseinheit übertragen wird. Das mobile Gerät kann dabei beispielsweise ein Smartphone sein. Das EDV-Programm kann in Form einer App auf dem Smartphone gespeichert sein. Smartphones sind heutig großflächig verfügbar. Das Verfahren kann beispielsweise bei einem Kunden eines Logistikdienstleisters bei der Vorbereitung des Einlieferns von Sendungseinheiten bei dem Logistikdienstleister angewendet werden. Heute ist es üblich, dass Absender, die regelmäßig größere Mengen von Sendungseinheiten versenden, Frankierungsvermerke mittels einer Frankiermaschine auf die Sendungseinheiten aufbringen. Eine solche Frankiermaschine kann beispielsweise mit einer Halterung für ein Smartphone aufgerüstet werden, wobei das Verfahren mit Hilfe der solcherart aufgerüsteten Frankiermaschine und einem entsprechenden Smartphone durchführbar ist.

In einer vorteilhaften Ausführungsform wird eine Logistikgebühr mit dem ersten Bild verknüpft.

In einer weiteren vorteilhaften Ausführungsform wird von der Sendungseinheit zu einem späteren Zeitpunkt ein zweites Bild erstellt, wobei das zweite Bild mit dem ersten Bild verglichen wird und die Sendungseinheit als identisch eingestuft wird, wenn das erste und das zweite Bild zu einem zuvor eingegebenen Maß übereinstimmen. In einer Ausführungsform beträgt das zuvor eingegebene Maß mindestens 50 %.

In einer weiteren vorteilhaften Ausführungsform wird mit der Erstellung eines die Sendungseinheit kennzeichnenden ersten Bildes ihrer Oberfläche eine Logistikgebühr bestimmt und mit dem ersten Bild und der mit dem ersten Bild verknüpften Identnummer verknüpft und auf der Datenverarbeitungseinheit gespeichert. Die Bestimmung der Logistikgebühr kann dabei über Parameter der Sendungseinheit, wie beispielsweise ihren Abmessungen erfolgen. Die Abmessungen können dem aufgenommenen Bild der Sendungsoberfläche entnommen werden. In einer Datenbank können unterschiedliche Logistikgebühren je nach den Abmessungen der Sendungseinheit gespeichert sein. Als weiterer Parameter für die Bestimmung der Logistikgebühr kann auch das Gewicht der Sendungseinheit herangezogen werden. Dafür muss das Gewicht der Sendungseinheit bestimmt werden. Wird das erste Bild der Oberfläche der Sendungseinheit beispielsweise mit einer Kamera, beispielsweise der Kamera eines Smartphones, während des Durchlaufs der Sendungseinheit durch eine modifizierte Frankiermaschine aufgenommen, ist es vorstellbar, dass die Frankiermaschine eine Waage aufweist und das Verfahren so ausgestaltet ist, dass das Gewicht der Sendungseinheit beim Durchlaufen durch die Frankiermaschine erfasst und mit dem ersten Bild sowie der Identnummer verknüpft wird.

Mit dem erfindungsgemäßen Verfahren ist es möglich, eine Sendungseinheit zu identifizieren, ohne dass ein spezielles Merkmal zuvor auf die Sendungseinheit aufgebracht wurde. Es hat sich herausgestellt, dass die Oberflächenstruktur einer Sendungseinheit analog einem Fingerabdruck zur Identifikation der Sendungseinheit heranziehbar ist. Den auf der Datenverarbeitungseinheit abgespeicherten Daten der Sendungseinheit können weitere Daten, wie Absender und/oder Empfänger zugeordnet werden. Bei der späteren Aufnahme eines zweiten Bildes der Sendungseinheitsoberfläche kann die Sendungseinheit über einen Vergleich mit dem ersten Bild eindeutig identifiziert werden.

Das erfindungsgemäße Verfahren kann auch für die Gebührenzahlung und Gebührenüberprüfung einer mit einer Adresse versehenen Postsendung verwendet werden, wenn als Kamera die Kamera eines mit einer Mobilfunknummer registrierten Smartphones verwendet wird. Die elektronische Datenverarbeitungsanlage des das Verfahrenden betreibenden Logistikunternehmens bildet eine virtuelle Portokasse, die für einen Nutzer angelegt ist, wobei das Logistikunternehmen dezentrale Sortierzentren betreibt. Zunächst wird die Postsendung mit einem Kennzeichen versehen, dass die Freimachung über das Verfahren erfolgt. Anschließend erstellt der Nutzer mittels der Kamera des Smartphones ein Bild der freizumachenden Sendung. Das aufgenommene Bild wird auf dem Smartphone angezeigt und der Nutzer überprüft die Qualität des Bildes, die Lesbarkeit und Vollständigkeit der Adresse und der Kennzeichnung des Freimachungsverfahrens. Genügt die Qualität des Bildes nicht den Anforderungen des Nutzers, und/oder meint der Nutzer, Lesbarkeit und/oder Vollständigkeit der Adresse und/oder der Kennzeichnung des Freimachungsverfahrens seien ungenügend, kann er die Aufnahme des Bildes eventuell nach Optimierung von Aufnahmeparametern, wie beispielsweise der Beleuchtung, und/oder Vervollständigung und Verbesserung der Adresse und/oder der Kennzeichnung des Freimachungsverfahrens wiederholen. Anschließend trifft der Nutzer über das Smartphone eine Produktauswahl, woraufhin das Bild sowie die Mobilfunknummer des Smartphones und Informationen zur Produktauswahl an die elektronische Datenverarbeitungsanlage des Logistikunternehmens weitergegeben werden. Dabei können auch weitere Informationen, wie beispielsweise der Aufnahmezeitpunkt des Bildes, die Mobilnummer des Smartphones, netzwerkbasierter und/oder genauer, beispielsweise mittels GPS (global positioning system) bestimmter Standort, Geräte- und Modellnummer des Smartphones, Name und Version des auf dem Smartphone installierten Betriebssystems etc., an die elektronische Datenverarbeitungsanlage des Logistikunternehmens weitergegeben werden. Anschließend erfolgt auf der elektronische Datenverarbeitungsanlage des Logistikunternehmens eine bildtechnische Analyse, wobei die Bildqualität anhand eines vordefinierten Kriteriums und einer vordefinierten Qualitätsschwelle geprüft wird und bei Nichterreichen dieser Qualitätsschwelle eine Bildoptimierung vorgenommen wird und bei Nichterreichen der Qualitätsschwelle nach der Optimierung und/oder bei Nichterkennen von Adresse und/oder der Freimachungsverfahrenskennzeichnung eine Fehlermeldung an die Mobilfunknummer gesendet wird, woraufhin das Verfahren beendet wird, und wobei im Falle, dass die Bildqualität unmittelbar oder nach Optimierung die Qualitätsschwelle erreicht, sowie bei Erkennen von Adresse und Freimachungsverfahrenskennzeichnung ein erster Identcode erzeugt wird. Bei diesem Schritt kann auch eine Adressprüfung hinsichtlich der Zustellfähigkeit der Sendung erfolgen. Beispielsweise kann die Adresse hinsichtlich des Vorhandenseins der Angaben zu Strasse, Postleitzahl und Ort überprüft werden.

Der erste Identcode ermöglicht dabei über eine Analyse der Bildinformationen die eindeutige Wiedererkennung der Sendung ohne dass es eines Aufbringens eines physikalischen Identcodes bedarf. Anschließend werden der erste Identcode und die Mobilfunknummer in der elektronischen Datenverabeitungsanlage des Logistikunternehmens gespeichert. Danach wird die virtuelle Portokasse des Nutzers aufgerufen und die der getroffenen Produktauswahl entsprechende Gebühr abgebucht, sofern entsprechende Deckung vorhanden ist, wobei eine Fehlermeldung an die Mobilfunknummer gesendet wird, wenn kein entsprechendes Guthaben in der virtuellen Portokasse vorhanden ist. In diesem Fall wird das Verfahren beendet. Nach korrekter Zahlung des Portobetrages wird eine Bestätigung der Frankierung an die Mobilfunknummer gesendet und der erste Identcode über die elektronische Datenverarbeitungsanlage des Logistikunternehmens an die dezentralen Sortierzentren weitergeleitet, wo für Sendungen mit der Kennzeichnung, dass die Freimachung über das Verfahren erfolgt, ein Abbild der Sendungsanschrift und Generierung eines zweiten Identcodes durchgeführt wird, wobei anschließend der zweite Identcode mit dem ersten Identcode verglichen wird, wobei eine Weiterverarbeitung der Sendung bei Übereinstimmung innerhalb zuvor definierten Grenzen erfolgt, und wobei im anderen Fall eine Ausschleusung der Sendung erfolgt.

Ein erfindungsgemäßes System zur Kennzeichnung einer Sendungseinheit in einem Logistikprozess weist eine Vorrichtung auf, durch das die Sendungseinheit hindurch transportierbar ist. Die Vorrichtung ist dazu eingerichtet, ein erstes Bild von der Oberfläche der Sendungseinheit aufzunehmen, während die Sendungseinheit durch die Vorrichtung transportiert wird. Dieses erste Bild stellt analog eines Fingerabdrucks eine eindeutig identifizierbare Abbildung der Oberfläche der Sendungseinheit dar. Die Vorrichtung ist weiterhin dazu eingerichtet, das aufgenommene Bild in Form eines Datenstroms an eine Datenverarbeitungseinheit zu versenden. Der Datenstrom kann beispielsweise über einen EDV Netzwerk, beispielsweise das Internet, an eine zentrale Datenverarbeitungseinheit des Logistikdienstleisters gesendet werden.

In einer vorteilhaften Ausführungsform des Systems weist die Vorrichtung eine Halterung für eine Kamera auf, wobei die Kamera dazu eingerichtet ist, das erste Bild von der Oberfläche der Sendungseinheit aufzunehmen, während die Sendungseinheit durch die Vorrichtung transportiert wird. Bei der Kamera kann es sich um eine Digitalkamera handeln, insbesondere kann es sich um die Kamera eines Smartphones handeln. Die Halterung kann dabei so ausgestaltet sein, dass der Nutzer ein Smartphone temporär auflegen kann, wobei das Smartphone so ausgerichtet ist, dass seine Kamera ein Bild der Oberfläche der Sendungseinheit aufnehmen kann, während die Sendungseinheit durch die Vorrichtung transportiert wird.

In einer weiteren vorteilhaften Ausführungsform des Systems ist die Halterung derart ausgerichtet, dass die Kamera in einem Winkel zwischen 45° und 90° zur Oberfläche der Sendungseinheit ausgerichtet ist. Es hat sich herausgestellt, dass Bilder, die unter einem Winkel zwischen 45° und 90°, gemessen zwischen der Längsachse des Objektivs der Kamera und der Oberfläche der Sendungseinheit aufgenommen sind, aussagekräftige Informationen über die Oberflächenstruktur einer Sendungseinheit liefern.

In einer weiteren vorteilhaften Ausführungsform des Systems zur Kennzeichnung einer Sendungseinheit in einem Logistikprozess weist das System zusätzlich zu der vorbeschriebenen Vorrichtung eine zentrale Datenverarbeitungseinheit und eine zweite Kamera auf, mit deren Hilfe ein zweites Bild der Sendungseinheit zu einem späteren Zeitpunkt aufnehmbar ist und wobei die Datenverarbeitungseinheit dazu eingerichtet ist, das erste Bild mit dem zweiten Bild zu vergleichen und bei einer Übereinstimmung von ersten und zweiten Bild zu mehr als einem zuvor eingestellten Wert die Sendungseinheit, von der das erste Bild aufgenommen wurde als identisch zu der Sendungseinheit, von der das zweite Bild aufgenommen wurde, zu identifizieren.

Wird eine Logistikgebühr mit dem ersten Bild der Sendungsoberfläche und der Identnummer verknüpft, ist es möglich, die Logistikgebühr dem Absender zuzuordnen, sofern Absenderinformationen ebenfalls mit der Identnummer verknüpft sind. Die Vorrichtung innerhalb des Systems, durch die die Sendungseinheit hindurch transportierbar ist, kann beispielsweise eine Frankiermaschine sein, wie sie üblicherweise von Versendern größerer Mengen an Sendungseinheiten verwendet wird. Solche bekannten Frankiermaschinen drucken Frankiervermerke auf Sendungseinheiten, die durch die Frankiermaschine hindurch transportiert werden. Solche bekannten Maschinen können mit einer Halterung nachgerüstet werden, mit deren Hilfe eine Kamera positioniert werden kann. Werden Sendungseinheiten durch die Frankiermaschine hindurch transportiert, können über die Kamera und/oder eine Waage, die die zutreffende Logistikgebühr bestimmende Parameter erfaßt, die zutreffende Logistikgebühr bestimmt und mit der Identnummer der Sendungseinheit verknüpft werden. Ein Frankiervermerk muss nicht auf die Sendungseinheit aufgebracht werden. Die Kontrolle, ob für eine Sendungseinheit die richtige Logistikgebühr erhoben ist, findet über die Aufnahme eines zweiten Bildes der Oberfläche der Sendungseinheit und den Vergleich mit den in der Datenverarbeitungseinheit abgespeicherten Daten des ersten Bildes statt. Unterfrankierung oder Frankierung mit gefälschten Frankierungsvermerken ist damit ausgeschlossen. Aufgedruckte oder aufgeklebte Frankierungsvermerke können entfallen. Verbrauchs- bzw. Verschleißmaterial wie Drucktinte und Druckstempel entfallen ebenfalls. Weiterhin entfallen die aus dem Stand der Technik bekannten Probleme mit schlecht oder nicht lesbaren Frankiervermerken und dem damit verbundenen erhöhten Aufwand der Ausschleusung aus automatisierten Sortierprozessen, der Handsortierung und der Rücksendung zum Absender. Darüber hinaus wird die Kundenzufriedenheit erhöht und es kommt zu einer Zeitersparnis, da keine Sendungen fälschlich an den Absender zurück gesendet und nicht erneut versendet werden müssen. Weiterhin ist eine Vorverarbeitung der Daten bei dem Logistikdienstleister möglich, da Sendungsdaten bereits an die Datenverarbeitungsanlage des Logistikdienstleisters übermittelt werden können, bevor Sendungseinheiten physisch beim Kunden abgeholt bzw. vom Kunden beim Logistikdienstleister eingeliefert werden. Da die Daten im Vorhinein bekannt sind, können beispielsweise bei einer Abholung der Sendungseinheiten beim Kunden dem Volumen entsprechende Kapazitäten, wie beispielsweise Fahrzeuge und Personal, bereitgestellt werden. Der Logistikdienstleister hat die Möglichkeit, auf plötzliche Mengenänderungen an Sendungseinheiten, wie sie beispielsweise in der Vorweihnachtszeit vorkommen, bereits im Vorfeld zu reagieren. Weiterhin ist eine einfache Sendungsverfolgung möglich, da die Sendungseinheiten eineindeutig identifizierbar und deren Daten aus der Datenverarbeitungseinheit abrufbar sind. Darüber hinaus kann die Logistikgebühr kumuliert zu bestimmten Stichtagen den jeweiligen Absendern in Rechnung gestellt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:

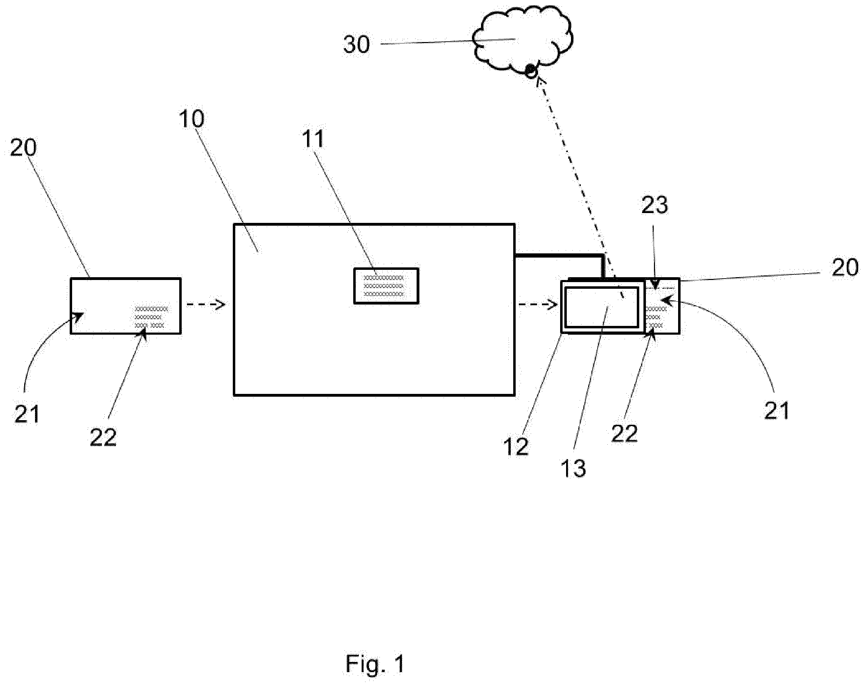

Fig. 1 Draufsicht einer erfindungsgemäßen Vorrichtung mit durchlaufenden Sendungseinheiten

Fig. 1 zeigt eine Draufsicht einer in dem erfindungsgemäßen System integrierten Vorrichtung 10 mit durchlaufenden Sendungseinheiten 20. Die abgebildete Vorrichtung 10 baut auf einer bekannten Frankiermaschine für Briefe auf. Die Frankiermaschine weist ein Display 11 auf. Das Display 11 kann als Touchscreen ausgeführt sein. Über das Display 11 kann ein Infotext, der als Info-Aufdruck 23 auf die Sendungseinheit 20 gedruckt werden kann, eingegeben werden. Die Vorrichtung 10 weist eine Halterung 12 auf, die ein Smartphone 13 haltert. Dabei weist das Smartphone 13 einen Winkel von ca. 180° zur Oberfläche 21 der Sendungseinheit 20 auf. Bei dieser Ausrichtung weist das Objektiv der Kamera des Smartphones einen Winkel von ca. 90° zur Oberfläche 21 der Sendungseinheit 20 auf. Eine Sendungseinheit 20 weist eine Adressangabe 22 auf ihrer Oberfläche 21 auf. Die Sendungseinheit 20 wird der Vorrichtung 10 zugeführt, wie durch den gestrichelten Pfeil angedeutet ist. In der Vorrichtung 10 wird der Info-Aufdruck auf die Oberfläche 21 der Sendungseinheit 20 aufgedruckt. Die Sendungseinheit 20 wird durch die Vorrichtung 10 hindurch transportiert, wobei in Transportrichtung gesehen am Ende der Vorrichtung 10 die Sendungseinheit 20 unter einem von einer Halterung 12 gehalterten Smartphone 13 hindurch transportiert wird. Das Smartphone 13 weist eine Kamera (nicht dargestellt) auf, mit der das Smartphone 13 ein erstes Bild der Oberfläche 21 der Sendungseinheit 20 erstellt. Das Smartphone 13 ist drahtlos über WLAN mit einer Datenverarbeitungseinheit 30 verbunden, wie durch den strichpunktierten Pfeil angedeutet ist. Das Smartphone 13 sendet das erste Bild in Form einer Bilddatei über das Internet an die Datenverarbeitungseinheit 30. In der Datenverarbeitungseinheit 30 wird das erste Bild mit einer Identnummer verknüpft und gemeinsam mit der Identnummer gespeichert. Aus dem ersten Bild der Oberfläche 21 der Sendungseinheit 20 können Parameter für die Bestimmung einer Logistikgebühr, beispielsweise die Abmessungen der Sendungseinheit 20, bestimmt werden. In der Datenverarbeitungseinheit 30 kann die bestimmte Logistikgebühr mit der Identnummer der Sendungseinheit 20 verknüpft werden, wodurch es möglich ist, die Logistikgebühr dem Absender zuzuordnen, sofern Absenderinformationen ebenfalls mit der Identnummer verknüpft sind.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 10: Vorrichtung
- 11: Display
- 12: Halterung
- 13: mobiles Gerät, Smartphone
- 20: Sendungseinheit
- 21: Oberfläche
- 22: Adressangabe
- 23: Info-Aufdruck

## Patentansprüche

1. Verfahren zur Kennzeichnung einer Sendungseinheit (20) in einem Logistikprozess,
enthaltend die Schritte,
Erstellen eines ersten Bildes der Oberfläche (21) der Sendungseinheit (20), wobei das erste Bild die Sendungseinheit (20) kennzeichnet, Verknüpfung des ersten Bildes mit einer Identnummer;
Speicherung des ersten Bildes und der Identnummer auf einer Datenverarbeitungseinheit (30).

2. Verfahren nach Anspruch 1,
**dadurch gekennzeichnet,**
**dass** das erste Bild als Bilddatei gespeichert wird.

3. Verfahren nach einem der vorhergehenden Ansprüche,
**dadurch gekennzeichnet,**
**dass** das erste Bild mit einer digitalen Kamera erstellt wird.

4. Verfahren nach Anspruch 3,
**dadurch gekennzeichnet,**
**dass** die digitale Kamera in einem mobilen Gerät (13) integriert ist, das mit einem Datenübertragungsnetzwerk verbunden ist und über Funktionalitäten einer elektronischen Datenverarbeitungsanlage verfügt, wobei das Datenübertragungsnetzwerk mit einer Datenverarbeitungseinheit (30) verbunden ist und auf dem mobilen Gerät (13) ein EDV-Programm läuft, mit dessen Hilfe das erste Bild auf die die Datenverarbeitungseinheit (30) übertragen wird.

5. Verfahren nach einem der vorhergehenden Ansprüche,
**dadurch gekennzeichnet,**
**dass** eine Logistikgebühr mit dem ersten Bild verknüpft wird.

6. Verfahren nach einem vorhergehenden Ansprüche,
**dadurch gekennzeichnet,**
**dass** von der Sendungseinheit (20) zu einem späteren Zeitpunkt ein zweites Bild erstellt wird, wobei das zweite Bild mit dem ersten Bild verglichen wird und die Sendungseinheit (20) als identisch zu der des ersten Bildes eingestuft wird, wenn das erste Bild und das zweite Bild zu einem zuvor eingegebenen Maß übereinstimmen.

7. Verfahren nach Anspruch 6,
**dadurch gekennzeichnet,**
**dass** das zuvor eingegebene Maß mindestens 50% beträgt.

8. Verfahren nach einem vorhergehenden Ansprüche,
**dadurch gekennzeichnet,**
**dass** mit dem Erstellen eines ersten Bildes der Oberfläche (21) der Sendungseinheit (20) eine Logistikgebühr bestimmt und mit dem ersten Bild und der mit dem ersten Bild verknüpften Identnummer verknüpft und auf der Datenverarbeitungseinheit (30) gespeichert wird.

9. System zur Kennzeichnung einer Sendungseinheit (20) in einem Logistikprozess,
**dadurch gekennzeichnet,**
**dass** das System eine Vorrichtung (10) aufweist, durch die die Sendungseinheit (20) hindurch transporttierbar ist und die dazu eingerichtet ist, ein erstes Bild von der Oberfläche der Sendungseinheit aufzunehmen, während die Sendungseinheit (20) durch die Vorrichtung (10) transportiert wird, wobei die Struktur der Oberfläche (21) der Sendungseinheit (20) abbildbar ist und die Vorrichtung (10) weiterhin dazu eingerichtet ist, das aufgenommene Bild in Form eines Datenstroms an eine Datenverarbeitungseinheit (30) zu versenden.

10. System nach Anspruch 9,
**dadurch gekennzeichnet,**
**dass** die Vorrichtung (10) eine Halterung (12) für eine Kamera aufweist, wobei die Kamera dazu eingerichtet ist, das erste Bild von der Oberfläche (21) der Sendungseinheit (20) aufzunehmen, während die Sendungseinheit (20) durch die Vorrichtung (10) transportiert wird.

11. System nach Anspruch 10,
**dadurch gekennzeichnet,**
**dass** die Halterung (12) derart ausgerichtet ist, dass die Kamera derart ausgerichtet ist, dass die Längsachse des Objektivs der Kamera in einem Winkel zwischen 45° und 90° zur Oberfläche (21) der Sendungseinheit (20) ausgerichtet ist.

12. System nach einem der Ansprüche 9-11,
**dadurch gekennzeichnet,**
**dass** das System zusätzlich zu der Vorrichtung (10) eine zentrale Datenverarbeitungseinheit (30) und eine zweite Kamera aufweist, mit deren Hilfe ein zweites Bild der Sendungseinheit (20) zu einem späteren Zeitpunkt aufnehmbar ist und wobei die zentrale Datenverarbeitungseinheit (30) dazu eingerichtet ist, das erste Bild mit dem zweiten Bild zu vergleichen und bei einer Übereinstimmung von ersten und zweiten Bild von mehr als einem zuvor eingestellten Wert die Sendungseinheit (20), von der das erste Bild aufgenommen wurde als identisch zu der Sendungseinheit (20), von der das zweite Bild aufgenommen wurde, zu identifizieren.
